(19) Europäisches Patentamt
European Patent Office
Office européen des brevets

(11) EP 1 262 495 A1

(12) EUROPEAN PATENT APPLICATION

(43) Date of publication:
**04.12.2002 Bulletin 2002/49**

(51) Int Cl.7: **C08F 8/30**

(21) Application number: **02011632.3**

(22) Date of filing: **29.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.05.2001 JP 2001162082**

(71) Applicant: **KANSAI PAINT CO., LTD.**
**Amagasaki-shi, Hyogo-ken 661-8555 (JP)**

(72) Inventors:
- **Inukai, Hiroshi**
**Nagoya-shi, Aichi-ken (JP)**
- **Hasegawa, Mitsutaka**
**Nagoya-shi, Aichi-ken (JP)**
- **Numa, Nobushige**
**Ebina-shi, Kanagawa-ken (JP)**
- **Sugishima, Masami**
**Hiratsuka-shi, Kanagawa-ken (JP)**
- **Nakamura, Koki**
**Chigasaki-shi, Kanagawa-ken (JP)**

(74) Representative: **Albrecht, Thomas, Dr. et al**
**Kraus & Weisert,**
**Thomas-Wimmer-Ring 15**
**80539 München (DE)**

(54) **Curable resin composition**

(57) The present invention provides a curable resin composition for a water base coating material comprising:

(I) a maleimide group-containing copolymer obtained by copolymerizing an ethylenically unsaturated monomer (a) having a maleimide group and other ethylenically unsaturated monomer (b);
(II) a carbonyl group-containing copolymer obtained by copolymerizing an ethylenically unsaturated monomer (c) having a carbonyl group and other ethylenically unsaturated monomer (d); and
(III) a compound having two or more functional groups per molecule which are the same or different and selected from a hydrazide group, a semicarbazide group and a hydrazone group; and which can readily be cured regardless of coating environment.



Printed by Jouve, 75001 PARIS (FR)

## Description

The present invention relates to a curable resin composition, more specifically to a resin composition for a water base coating material of a single liquid type which can readily be cured regardless of coating environment.

In recent years, switching from an organic solvent type over to a water base type has been being expedited in the fields of coating materials, inks and adhesives from the viewpoints of resource-saving, environmental sanitation, non-public pollution and non-hazardousness. For example, in water base coating materials in the construction field, required are coating materials which are dried at a room temperature and also which form coating films excellent in performances such as a water resistance, a weatherability and a stain resistance. As a resin composition for a water base cold-dryable single liquid type coating material which satisfies such requirement and is suited to construction use, emulsion particles having a cross-linkable carbonyl group and compositions comprising a dihydrazide compound are disclosed in, for example, Japanese Patent Application Laid-Open No. 249587/1992. The above compositions are excellent in a storage stability and can form coating films excellent in physical properties such as a water resistance, but they have defects that a cross-linking reaction does not sufficiently proceed depending on coating environment in a certain case. There is, for example, a problem that the water resistance at an initial stage after coating (an initial water resistance) is unsatisfactory in coating in the environment in which evaporation of moisture is notably slow as observed when the ambient temperature is low.

Intensive investigations were repeated by the present inventors in order to solve the problem described above involved in conventional resin compositions for water base cold-dryable single liquid type coatings. As a result, they found that a resin composition for coating materials capable of forming a coating film which is excellent in a water resistance and a curing property, even at an initial stage after coating regardless of coating environment, can be obtained by using a resin composition comprising a copolymer having a cross-linkable carbonyl group and a cross-linking agent in combination with a copolymer having a maleimide group cured by irradiation with natural light, and they have come to complete the present invention.

Thus, the present invention provides a curable resin composition comprising:

(I) a maleimide group-containing copolymer obtained by copolymerizing an ethylenically unsaturated monomer (a) having a maleimide group and the other ethylenically unsaturated monomer (b);
(II) a carbonyl group-containing copolymer obtained by copolymerizing an ethylenically unsaturated monomer (c) having a carbonyl group and the other ethylenically unsaturated monomer (d); and
(III) a compound having two or more functional groups per molecule which are the same or different and selected from a hydrazide group, a semicarbazide group and a hydrazone group.

The curable resin composition of the present invention is explained below in further details.

Maleimide group-containing copolymer (I)

The maleimide group-containing copolymer (I) is a component for three-dimensionally cross-linking a coating film formed from the resin composition of the present invention by optical dimerization by irradiating with natural light. It is obtained by copolymerizing the ethylenically unsaturated monomer (a) having a maleimide group (hereinafter, referred to as a maleimide monomer) and the other ethylenically unsaturated monomers (b).

Included in such maleimide monomer (a) is a compound having an ethylenically unsaturated group and a cyclic imide group represented by the following formula (1) (hereinafter referred to merely as an imide compound):

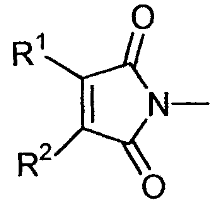

(1)

wherein $R^1$ and $R^2$ each represent independently a hydrogen atom or an alkyl group, or a group forming a carbon ring together with carbon atoms to which they are bonded.

The ethylenically unsaturated group in the imide compound described above includes, for example, a vinyl group, an allyl group and a (meth)acryloyl group, and the (meth)acryloyl group is particularly preferred.

From the viewpoints of the polymerizing property between the imide compounds and the copolymerizing property with the other ethylenically unsaturated monomers (b), $R^1$ and $R^2$ in the above formula (1) each are independently alkyl groups, preferably alkyl groups having 4 or less carbon atoms, or groups forming a carbon ring together, for example $-CH_2CH_2CH_2-$ and $-CH_2CH_2CH_2 CH_2-$, preferably $-CH_2CH_2CH_2CH_2-$ .

To be specific, the imide compound includes, for example, imide (meth)acrylate represented by the following formula (2):

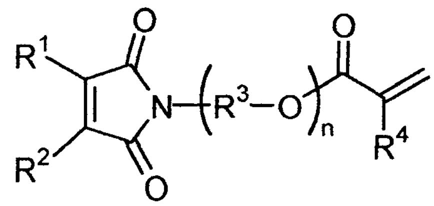

(2)

wherein $R^1$ and $R^2$ are synonymous with those described above; $R^3$ represents an alkylene group, preferably an alkylene group having 1 to 6 carbon atoms and more preferably an ethylene group or a propylene group; $R^4$ represents a hydrogen atom or a methyl group; and n is an integer of 1 to 6, preferably 1 or 2 and more preferably 1.

Compounds represented by the following formulas (3) and (4) can be given as imide (meth)acrylate described above:

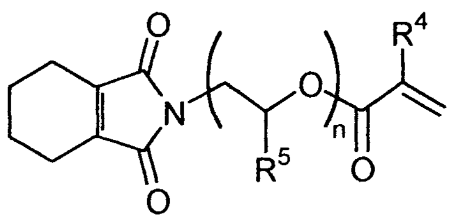

(3)

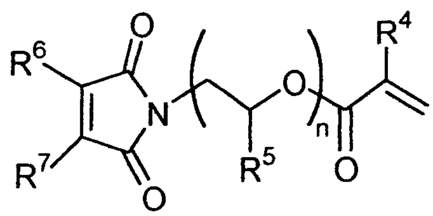

(4)

wherein $R^4$ and $R^5$ each represent independently a hydrogen atom or a methyl group; $R^6$ and $R^7$ each represent independently an alkyl group having 4 or less carbon atoms; and n is an integer of 1 to 6.

Imide (meth)acrylate is a conventionally known compound and can be produced from an acid anhydride, aminoalcohol and (meth)acrylic acid by methods described in, for example, K. Kato et al., Organic Synthetic Chemistry Association Report, 30 (10), 897 (1972); Javier de Abajo et al., Polymer, vol. 33 (5), 1090 (1992); Japanese Patent Application Laid-Open No. 53119/1981 and Japanese Patent Application Laid-Open No. 242569/1989.

The other ethylenically unsaturated monomer (b) copolymerized with the maleimide monomer (a) described above includes, for example, alkyl (meth)acrylates such as methyl (meth)acrylate, ethyl (meth)acrylate, propyl (meth) acrylate, n-butyl (meth)acrylate, isobutyl (meth)acrylate, pentyl (meth)acrylate, hexyl (meth)acrylate, 2-ethylhexyl (meth)acrylate, lauryl (meth)acrylate and stearyl (meth)acrylate; cyclic (meth)acrylates such as cyclohexyl (meth)acrylate and isobornyl (meth)acrylate; aralkyl (meth)acrylates such as benzyl (meth)acrylate; alkoxyalkyl (meth)acrylates such as 2-methoxyethyl (meth)acrylate and 2-ethoxyethyl (meth)acrylate; hydroxyalkyl (meth)acrylates such as hydroxyethyl (meth)acrylate, hydroxypropyl (meth)acrylate and hydroxybutyl (meth)acrylate; perfluoroalkyl (meth)acrylate, glycidyl (meth)acrylate, N,N-diethylaminoethyl (meth)acrylate; (meth)acrylic acid, (meth)acrylonitrile; vinyl ester compounds such as vinyl acetate and vinyl propionate; aromatic vinyl compounds such as styrene and $\alpha$-methylstyrene;

and ethylenically unsaturated monomers having an alkoxysilyl group such as vinyl trimethoxysilane, vinyl triethoxysilane, γ-methacryloyloxypropyl trimethoxy-silane and γ-methacryloyloxypropyl triethoxysilane. Among them, alkyl (meth)acrylates having an alkyl group having 1 to 8 carbon atoms, (meth)acrylic acid, styrene, hydroxyalkyl (meth) acrylates having an alkylene group having 2 to 4 carbon atoms and glycidyl (meth)acrylate are given as the preferred monomer from the viewpoints of a copolymerizability, coating film physical properties and the like. Further, cyclohexyl (meth)acrylate is given as the preferred monomer from the viewpoint of a weatherability.

The copolymer (I) can readily be produced, for example, by copolymerizing the maleimide monomer (a) with the other ethylenically unsaturated monomer (b), each described above, in the presence of a surfactant as an emulsifier according to a conventional emulsion polymerization method.

In the emulsion polymerization described above, the maleimide monomer (a) and the other ethylenically unsaturated monomer (b) can be used in the following range, each based on the total amount of the both monomers: the maleimide monomer (a) falls usually in a range of 1% to 40% by weight, preferably 2% to 20% by weight; and the other ethylenically unsaturated monomer (b) falls in a range of 60% to 99% by weight, preferably 80% to 98% by weight. If a use proportion of the ethylenically unsaturated monomer (a) having a maleimide group is less than 1% by weight, the physical properties such as an initial water resistance immediately after coating are likely to be reduced in the environment in which a coating film formed from the resin composition using the resulting copolymer (I) is delayed in vaporization of moisture. On the other hand, if it exceeds 40% by weight, the resin composition tends to be increased in a cross-linking density too much, so that the coating film becomes fragile.

In the production of the copolymer (I), capable of being used as an emulsifier (surfactant) are, for example, anionic surfactants such as sodium dialkylsulfosuccinate, sodium dodecylbenzenesulfonate, sodium laurylsulfate, sodium polyoxyethylene alkylphenyl ether sulfate and sodium alkyl diphenyl ether sulfonate, and nonionic surfactants such as polyoxyethylene higher alcohol ether and polyoxyethylene alkylphenyl ether which are usually used. Radically polymerizable surfactants are preferably used from the viewpoint of a water resistance of the coating film formed using the resin composition finally obtained. When a radically polymerizable surfactant is used as the emulsifier, the above radically polymerizable surfactant is incorporated into the copolymer as the third component.

Capable of being used as the radically polymerizable surfactant are, for example, conventionally known ones described in U.S. Patent No. 3,689,448, Japanese Patent Publication No. 29657/1981, Japanese Patent Application Laid-Open No. 28208/1981, Japanese Patent Application Laid-Open No. 127697/1981, Japanese Patent Application Laid-Open No. 100502/1987 and Japanese Patent Application Laid-Open No. 53802/1992. Further, the commercial products include, for example, "Latemul" (trade name, manufactured by Kao Corporation), "Eleminol" (trade name, manufactured by Sanyo Chemical Industries, Ltd.), "Aquaron" (trade name, manufactured by Dai-ichi Kogyo Seiyaku Co., Ltd.) and "Adeka Reasoap" (trade name, manufactured by Asahi Denka Kogyo K. K.).

In the present invention, particularly suited is a surfactant comprising a polyoxyalkylene group as a principal chain and having a radically polymerizable double bond at one end and an ion-dissociative group at the other end, to be more specific, for example, a compound represented by the following formula (5):

$$Z\text{-}(AO)_n\text{-}Y \qquad (5)$$

wherein Z represents a group having a radically polymerizable double bond; AO represents an oxyalkylene group; n represents an integer of 2 or more; and Y represents an ion-dissociative group.

The group having a radically polymerizable double bond described above includes groups having a structure in which a hydrophobic group part such as aromatic hydrocarbon groups, alkyl-substituted aromatic hydrocarbon groups, higher alkyl groups and alicyclic hydrocarbon groups is combined with a radically polymerizable double bond-containing part such as (meth)allyl, propenyl and butenyl groups.

The radically polymerizable surfactant may be either anionic or cationic, and the anionic ones are particularly preferred. Accordingly, preferred as the ion-dissociative group are salts in which an anion is covalently bonded to an oxyalkylene group and a cation is ionically bonded thereto. To be specific, it includes, for example, $-SO_3Na$, $-SO_3NH_4$, $-COONa$, $-COONH_4$, $-PO_3Na_2$ and $-PO_3(NH_4)_2$, and among them, $-SO_3Na$ and $-SO_3NH_4$ are suited.

The repeating number n of the oxyalkylene unit in the polyoxyalkylene group is usually 300 or less, preferably 5 to 50, and the kind of the alkylene group is preferably an ethylene group or a propylene group.

To be specific, such radically polymerizable surfactant includes, for example, compounds represented by the following formulas (6), (7) and (8):

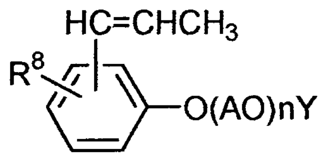

(6)

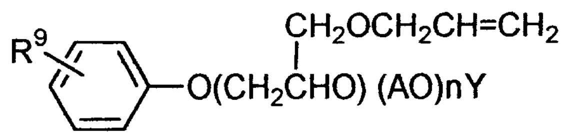

(7)

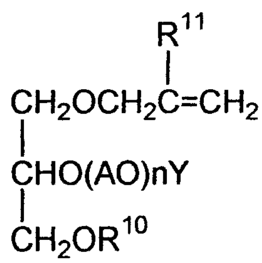

(8)

wherein $R^8$ and $R^9$ each represent a linear or branched alkyl group having 6 to 18, preferably 6 to 16 carbon atoms; $R^{10}$ represents an alkyl group having 8 to 24, preferably 8 to 22 carbon atoms; $R^{11}$ represents a hydrogen atom or a methyl group; and Y represents the ion-dissociative group described above.

A use amount of the radically polymerizable surfactant is different according to the kinds of the maleimide monomer (a) and the other ethylenically unsaturated monomer (b), and the kind of the radically polymerizable surfactant used. In general, it falls preferably in a range of 0.1 to 5 parts by weight per 100 parts by weight the total amount of the monomers used. If a use amount of the radically polymerizable surfactant is less than 0.1 part by weight, an emulsion obtained by emulsion polymerization using this is likely to be reduced in stability. On the other hand, if it exceeds 5 parts by weight, an effect of a rise in water resistance of the coating film in proportion to the addition amount is not only not observed but also tends to be rather reduced in the water resistance.

Further, anionic high molecular surfactants such as a polycarboxylic acid base and a polysulfonic acid base, and nonionic high molecular surfactants such as polyvinyl alcohol can be used as well in combination in emulsion polymerization from the viewpoints of a stability of the emulsion and a rise in a water resistance of the coating film. A use amount thereof falls usually in a range of preferably 0.1 to 5 parts by weight per 100 parts by weight of the total amount of the monomers used.

The maleimide monomer (a) and the other ethylenically unsaturated monomer (b) can be emulsion-polymerized by, for example, the following methods: a method in which the mixture of the monomers (a) and (b) described above are emulsified and dispersed in an aqueous medium using the surfactants described above, and a polymerization initiator is added to heat and stir the mixture; and a method in which the mixture of the monomers (a) and (b) described above and the surfactants described above are used to prepare first a water base emulsion, and the water base emulsion is added to an aqueous medium containing a polymerization initiator while heating and stirring. In this case, a chain transfer agent can be used as well, if necessary, in order to control a molecular weight of the resulting copolymer.

The polymerization initiator described above includes, for example, persulfates such as potassium persulfate and ammonium persulfate; and peroxides such as hydrogen peroxide, benzoyl peroxide and t-butyl hydroperoxide. They may be used in combination with a reducing agent such as sodium bisulfite and ascorbic acid and may be used in the form of a redox initiator. Among them, the water soluble polymerization initiators are particularly preferred. The chain transfer agent described above includes, for example, dodecylmercaptan, disulfide xanthate, diazothioether and 2-propanol.

The copolymer (I) obtained in the manner described above can have a number average molecular weight falling in a range of usually 1,000 to 1,000,000, preferably 10,000 to 500,000. In the present specification, a number average molecular weight is a value obtained by converting a molecular weight measured by gel permeation chromatography using tetrahydrofuran as a solvent based on a molecular weight of polyethylene.

Carbonyl group-containing Copolymer (II)

A carbonyl group-containing copolymer (II) is obtained by copolymerizing an ethylenically unsaturated monomer (c) having a carbonyl group (hereinafter referred to as a carbonyl monomer) with the other ethylenically unsaturated monomer (d), and the carbonyl group contained in the copolymer (II) derived from the carbonyl monomer (c) is subjected to cross-linking reaction with a functional group in the compound (III) described later and is useful for curing a coating film formed from the resin composition of the present invention.

Suited as the above carbonyl monomer (c) is a monomer having the following in a molecule: at least one carbonyl-containing group selected from an aldehyde group and a keto group, and a polymerizable double bond capable of polymerizing. To be specific, it includes, for example, (meth)acrolein, formylstyrol, vinyl alkyl ketone having 4 to 7 carbon atoms (for example, vinyl methyl ketone, vinyl ethyl ketone and vinyl butyl ketone), acetoacetoxyethyl (meth) acrylate and diacetone (meth)acrylamide. Among them, diacetone (meth)acrylamide is preferred for the reasons of that it is easy to obtain and excellent in a reactivity with the compound (III) described later.

On the other hand, the other above ethylenically unsaturated monomer (d) copolymerized with the carbonyl monomer (c) includes, for example, alkyl (meth)acrylates such as methyl (meth)acrylate, ethyl (meth)acrylate, propyl (meth)acrylate, n-butyl (meth)acrylate, isobutyl (meth)acrylate, pentyl (meth)acrylate, hexyl (meth)acrylate, 2-ethylhexyl (meth)acrylate, lauryl (meth)acrylate and stearyl (meth)acrylate; cyclic (meth)acrylates such as cyclohexyl (meth) acrylate and isobornyl (meth)acrylate; aralkyl (meth)acrylates such as benzyl (meth)acrylate; alkoxyalkyl (meth)acrylates such as 2-methoxyethyl (meth)acrylate and 2-ethoxyethyl (meth)acrylate; hydroxyalkyl (meth)acrylates such as hydroxyethyl (meth)acrylate, hydroxypropyl (meth)acrylate and hydroxybutyl (meth)acrylate; perfluoroalkyl (meth)acrylate, glycidyl (meth)acrylate, N,N-diethylaminoethyl (meth)acrylate; (meth)acrylic acid, (meth)acrylamide, (meth)acrylonitrile; vinyl ester compounds such as vinyl acetate and vinyl propionate; aromatic vinyl compounds such as styrene and $\alpha$-methylstyrene, and ethylenically unsaturated compounds having an alkoxysilyl group such as vinyl trimethoxysilane, vinyl triethoxysilane, $\gamma$-methacryloyloxypropyltrimethoxysilane and $\gamma$-methacryloyloxypropyltriethoxysilane. Among them, styrene, alkyl (meth)acrylates having an alkyl group having 1 to 8 carbon atoms, (meth)acrylic acid and (meth)acrylamide are given as the preferred monomer from the viewpoints of a copolymerizability, coating film physical properties and a particle stability.

The copolymer (II) can readily be produced, for example, by copolymerizing the carbonyl monomer (c) described above with the other ethylenically unsaturated monomer (d) in the presence of a surfactant as an emulsifier according to a conventional emulsion polymerization method.

In the emulsion polymerization described above, the carbonyl monomer (c) and the other ethylenically unsaturated monomer (d) can be used in the following proportion, each based on the total amount of the both monomers: the carbonyl monomer (c) falls usually in a range of 2% to 30% by weight, preferably 5% to 20% by weight; and the other ethylenically unsaturated monomer (d) falls in a range of 70% to 98% by weight, preferably 80% to 95% by weight.

If a use amount of the ethylenically unsaturated monomer (c) having a carbonyl group is less than 2% by weight, the physical properties such as a hardness, a water resistance and a stain resistance of a coating film formed from the resin composition using the resulting copolymer (II) are likely to be unsatisfactory. On the other hand, if it exceeds 30% by weight, the copolymer (II) is increased in a cost, and in addition thereto, the coating film is increased in hydrophilicity too much, so that it tends to be reduced in a water resistance even after curing.

A surfactant comprising a polyoxyalkylene group as a principal chain and having a hydrophobic group at one end and an ion-dissociative group at the other end is suited as the emulsifier used in the production of the copolymer (II), and the above hydrophobic group includes, for example, an alkyl group and an aryl group. As the polyoxyalkylene group and the ion-dissociative group, the same ones as those described in relation to the production of the copolymer (I) can be used.

When such surfactant is used as the emulsifier, a hydrophilic polyoxyalkylene chain part coordinates between a polymer phase of the copolymer particle formed and an anion in water, and cross-linking of the emulsified copolymer can be prevented from being expedited on the surface of the particle during storage.

Commercial products of such surfactant include, for example, "Newcol 560SN", "Newcol 560SF", "Newcol 707SF", "Newcol 861SE" and "Newcol 1305SN" (all manufactured by Nippon Nyukazai Co., Ltd.), "Hitenol" series, (manufactured by Dai-ichi Kogyo Seiyaku Co., Ltd.), "Emal NC-35" and "Levenol WZ" (all manufactured by Kao Corporation).

A use amount of these surfactants can be allowed to fall usually in a range of 0.1% to 6% by weight, preferably 0.2% to 5% by weight based on the total amount of the monomers used.

Capable of being used as the emulsifier in addition to the surfactants described above are other anionic surfactants having no polyoxyalkylene chains, and the nonionic surfactants and the radically polymerizable surfactants each described above in relation to the production of the copolymer (I). Further, the anionic high molecular surfactants and the nonionic high molecular surfactants each described above may be used in combination for the reason of a rise in a water resistance of the coating film.
Emulsion polymerization of the carbonyl monomer (c) and the other ethylenically unsaturated monomer (d) can be carried out in the same manner as emulsion polymerization of the maleimide monomer (a) and the other ethylenically unsaturated monomer (b).
The copolymer (II) thus produced can have a number average molecular weight falling in a range of usually 5,000 to 1,000,000, preferably 20,000 to 500,000.

Compound (III)

The resin composition of the present invention contains the compound (III) having two or more functional groups per molecule which may be the same or different and are selected from a hydrazide group, a semicarbazide group and a hydrazone group as a cross-linking agent reacted with a carbonyl group contained in the copolymer (II).
A compound (III-1) having two or more hydrazide groups per molecule includes, for example, dihydrazides of saturated aliphatic dicarboxylic acids having 2 to 18 carbon atoms such as oxalic acid dihydrazide, malonic acid dihydrazide, succinic acid dihydrazide, glutaric acid dihydrazide, adipic acid dihydrazide and sebacic acid dihydrazide; dihydrazides of monoolefinic unsaturated dicarboxylic acids such as maleic acid dihydrazide, fumaric acid dihydrazide and itaconic acid dihydrazide; dihydrazides of phthalic acid, terephthalic acid and isophthalic acid; dihydrazide, trihydra zide or tetrahydrazide of pyromellitic acid; nitrilotriacetic acid trihydrazide, citric acid trihydrazide and 1,2,4-benzenetrihydrazide; ethylenediaminetetraacetic acid tetrahydrazide, 1,4,5,8-naphthoic acid tetrahydrazide; and polyhydrazide obtained by reacting a lower polymer having a carboxylic acid lower alkyl ester group with hydrazine or a hydrazine hydrate (refer to Japanese Patent Publication No. 22878/1977).
If the hydrazide compounds described above have a too strong hydrophobicity, dispersion thereof in water becomes difficult, and an even cross-linked coating film is not likely to be obtained, so that the compounds having a suitable hydrophilicity and a relatively low molecular weight are suitably used. Among the examples described above, suited are dihydrazides of saturated aliphatic dicarboxylic acids such as, for example, adipic acid dihydrazide and succinic acid dihydrazide.
A compound (III-2) having two or more semicarbazide groups per molecule includes, for example, carbonic acid dihydrazide and bissemicarbazide; multifunctional semicarbazides obtained by reacting diisocyanates such as hexamethylene-diisocyanate and isophoronediisocyanate, or polyisocyanate compounds derived from them with N,N-substituted hydrazines such as N,N-dimethylhydrazine and the hydrazides given as the examples described above in excess amounts; water base multifunctional semicarbazides obtained by reacting the dihydrazides given as the examples described above in excess amounts with isocyanate groups contained in reaction products of the above polyisocyanate compounds with active hydrogen compounds having hydrophilic groups such as polyetherpolyols and polyethylene glycol monoalkyl ethers; and the mixtures of the above multifunctional semicarbazides and water base multifunctional semicarbazides (for example, refer to Japanese Patent Application Laid-Open No. 151358/1996, Japanese Patent Application Laid-Open No. 283377/1996 and Japanese Patent Application Laid-Open No. 245878/1996).
For example, bisacetyl dihydrazone can suitably be used as a compound (III-3) having two or more hydrazone groups per molecule.
The compounds (III-1), (III-2) and (III-3) described above each can be used alone or may be used in combination of two or more kinds thereof.

Curable resin composition

The curable resin composition of the present invention comprises the maleimide group-containing copolymer (I), the carbonyl group-containing copolymer (II) and the compound (III) as the fundamental components, and it is prepared by dissolving or dispersing them in an aqueous medium.
A blending proportion of the respective components described above in the resin composition of the present invention shall not strictly be restricted and can be changed according to the uses of the above resin composition. The compound (I) and the compound (II) can be in a range of generally 3/97 to 90/10, preferably 5/95 to 50/50 in terms of a solid matter weight ratio of the copolymer (I)/the copolymer (II). The compound (III) can be blended in such a proportion that a functional group contained in the compound (III) falls in a range of usually 0.01 to 2 moles, preferably 0.1 to 1.5 moles per mole of carbonyl groups contained in the copolymer (II). When the solid matter weight ratio of the copolymer (I)/the copolymer (II) described above is smaller than 3/97, it becomes difficult to obtain a water resistance (an initial water resistance) immediately after coating under high humidity environment. On the other hand, when it exceeds

90/10, the initial drying characteristics in coating of parts located where sunlight is weak such as indoors and in the shade are likely to be reduced. Moreover, when the proportion of the functional groups in the compound (III) described above is less than 0.01 mole, there is a possibility of that physical performances such as a hardness, a water resistance and a stain resistance of a coating film formed from the resin composition of the present invention are unsatisfactory. On the other hand, when it exceeds 2 moles, the storage stability of the resin composition of the present invention tends to be reduced.

Further, an organosilicate compound or a modified organosilicate compound can be added, if necessary, to the resin composition of the present invention in order to further improve a stain resistance of the coating film when used for a top coating material for single layer finishing or multilayer finishing. The organosilicate compound which can be used for such purpose includes, for example, a compound represented by the following formula (9):

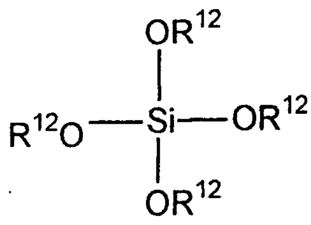

(9)

wherein $R^{12}$ is the same or different and represents a hydrogen atom or a monovalent hydrocarbon group having 1 to 10, preferably 1 to 4 carbon atoms.

Suited as the hydrocarbon group described above are, for example, alkyl groups such as methyl, ethyl, n-propyl, iso-propyl; n-butyl, i-butyl, t-butyl, n-pentyl, iso-pentyl, n-hexyl, iso-hexyl and n-octyl and aryl groups such as phenyl.

Specific examples of the organosilicate compound represented by the above formula (9) includes, for example, tetrahydroxysilane, tetramethoxysilane, tetraethoxysilane, tetrapropoxysilane, tetrabutoxysilane, tetraphenoxysilane and dimethoxydiethoxysilane. They can be used alone or in combination of two or more kinds thereof.

When introducing the organosilicate compound described above into the water base composition, it can be blended in the form of an emulsion prepared by forcibly dispersing it in water together with an emulsifier by means of a homogenizer.

Branched or linear condensation products of the organosilicate compounds themselves described above can be used as well, and a condensation degree thereof falls suitably in a range of usually 2 to 100, particularly 5 to 50.

Further, a modified organosilicate compound prepared by reacting an alkoxy group or a hydroxyl group contained in the organosilicate compound and/or a condensation product thereof described above with a part of a polyalkylene glycol base compound (for example, 0.001 to 0.5 mole, particularly 0.05 to 0.2 mole of the polyalkylene glycol base compound per mole of the above alkoxy group or hydroxyl group) can suitably be used as the organosilicate compound for the reason that they have a good solubility in water.

The polyalkylene glycol base compound as a modifying agent includes a compound represented by the following formula (10):

$$R^{13}O\text{-}(R^{14}O)_n\text{-}H \qquad (10)$$

wherein $R^{13}$ represents a hydrogen atom, an alkyl group or an aryl group; $R^{14}$ represents an alkylene group having 2 to 4 carbon atoms; and n is 2 to 60. To be specific, such compound includes, for example, polyalkylene glycols such as polyethylene glycol, polypropylene glycol and polytetramethylene glycol; alkoxypolyalkylene glycols such as methoxypolyethylene glycol, ethoxypolyethylene glycol, ethoxypolypropylene glycol and ethoxypolybutylene glycol; and polyoxyalkylene alkylphenyl ethers such as polyoxyethylene nonylphenyl ether and polyoxyethylene octylphenyl ether. In particular, polyethylene glycol and polyoxyethylene nonylphenyl ether are suited.

A content of the organosilicate compound described above in the resin composition of the present invention can be allowed to fall in a range of usually 0.1 to 50 parts by weight, preferably 1 to 20 parts by weight per 100 parts by weight of the resin solid matter.

In the curable resin composition of the present invention, a compound having two or more (meth)acryloyl groups such as alkylene glycol di(meth)acrylate, polyalkylene glycol poly(meth)acrylate, urethane (meth)acrylate and polyester (meth)acrylate can be added, if necessary, in order to promote photo-curing in the copolymer (I). Further,

capable of being blended in the curable resin composition of the present invention, if necessary, are a color pigment, an extender pigment, a surfactant, a dispersant, a defoaming agent, a thickener, a film-forming aid, a preservative, an antifreezing agent and the like.

The curable resin composition of the present invention can be prepared, for example, by adding and mixing the compound (III) and the other additives into the dispersion in an aqueous medium of the compounds (I) and (II).

The curable resin composition of the present invention is readily cured at a room temperature, and curing thereof is further expedited by irradiation with natural light, so that it is particularly suited to a resin component in a water base coating material for coating interior finish and exterior finish of buildings, bridges and shipping.

Water base coating material composition

When using the resin composition of the present invention as a coating material, conventional additives for a coating material can be blended. The additives include, for example, fillers such as clay, talc and titan white; film-forming aids such as ethylene glycol monobutyl ether, diethylene glycol monobutyl ether and dipropylene glycol monobutyl ether; plasticizers such as dibutyl phthalate and dioctyl phthalate; tackifiers such as rosin, terpenephenol and petroleum resins; various surfactants used for the purposes of humidifying, dispersing and defoaming; and thickeners, thixotropy agents and antifreezing agents. Further when used as a coating material for coloring, a pigment can be blended. Conventional pigments for a coating material can be used as the pigment. To be specific, they include, for example, color pigments such as titanium oxide, carbon black and red iron oxide; extender pigments such as calcium carbonate, talc, mica, clay, diatomaceous earth, silicate and baryte; and aggregates, and they can suitably be selected and used according to use purposes of the coating material composition of the present invention.

A content of the pigment falls preferably in a range of 10% to 70% in terms of a pigment volume concentration (hereinafter abbreviated as "PVC") in the above coating material composition, so that the composition is not substantially prevented from being photo-cured and, a suitable covering property as an enamel coating material is maintained.

In this case, the "pigment volume concentration (PVC)" is a volume proportion of the pigment component contained in the mixed solid matter of the resin and the pigment in the coating material composition and is a value calculated from the following equation:

$$\text{PVC} = \frac{\text{volume of pigment component}}{\text{(volume of pigment component)} + \text{(volume of resin solid matter)}} \times 100$$

PVC described above can be allowed to fall in the following range: in a range of 10% to 60%, preferably 15% to 55% when the coating material composition of the present invention is used as a top coating material; and in a range of 30% to 70%, preferably 30% to 66% when it is used as an under coating material.

The water base coating material composition of the present invention is readily cured at a room temperature, and curing thereof is further expedited by irradiation with natural light, so that it is particularly suited for coating interior finish and exterior finish of buildings, bridges and shipping. Further, the coating material composition of the present invention forms a coating film having an excellent performance even with single layer finish, and therefore, it can be used as a single layer top coating material. In addition thereto, it can also be used as a top coating material for multilayer finish or an under coating material for controlling a base.

The coating material composition of the present invention can be applied to a base material face, a base-controlling face or an old coating film face, and the above base material face shall not specifically be restricted. It includes, for example, a concrete face, a mortar face, a slate board, a PC board, an ALC board, a cement calcium silicate board, a concrete block face, wood, stone, plastic and metal. The base-controlling face or the old coating film face includes coating film faces of an acryl resin base, an acryl urethane resin base, a polyurethane resin base, a fluororesin base, a silicon acryl resin base, a vinyl acetate resin base and an epoxy resin base which are provided on these base materials.

A coating amount of the water base coating material composition of the present invention falls suitably in a range of usually 0.3 kg/$m^2$ to 1.5 kg/$m^2$, preferably 0.4 kg/$m^2$ to 1.0 kg/$m^2$ when used for single layer finish; in a range of usually 0.06 kg/$m^2$ to 2.0 kg/$m^2$, preferably 0.8 kg/$m^2$ to 1.6 kg/$m^2$ when used as a top coating material; and in a range of usually 0.3 kg/$m^2$ to 2.0 kg/$m^2$, preferably 0.5 kg/$m^2$ to 1.5 kg/$m^2$ when used as an under coating material.

It can be coated by means of conventionally known applicators such as a roller, an air spray, an airless spray, a lithin gun, a universal gun and a brush.

The present invention is more specifically explained below with reference to examples. "Part" means part by weight.

Production of maleimide group-containing copolymer

Production Example 1

Mixed were 10 parts of imide acrylate represented by the following formula (11) (hereinafter referred to merely as imide acrylate), 50 parts of n-butyl methacrylate, 25 parts of methyl methacrylate, 14 parts of n-butyl acrylate and one part of methacrylic acid, and added to the mixture were 100 parts of deionized water and 0.5 part of "Aquaron HS10" (remark 1) to prepare a monomer emulsion by means of a rotary homomixer.
On the other hand, the inside of a flask charged with 45 parts of deionized water and 0.5 part of "Aquaron HS10" (remark 1) was substituted with nitrogen, and then the flask was heated to a temperature of 80°C. Added thereto were one part of ammonium persulfate and 2 weight % portion of the monomer emulsion described above while maintaining the internal liquid at a temperature of 80°C. The remaining monomer emulsion was dropwise added in 2 hours from 15 minutes later after added, and the mixture was ripened as it was for 2 hours. After ripened, it was cooled down, and 3 parts of 10 wt % aqueous ammonia was dropwise added thereto as a neutralizing agent to obtain a copolymer water dispersion (A-1) of an emulsion type.

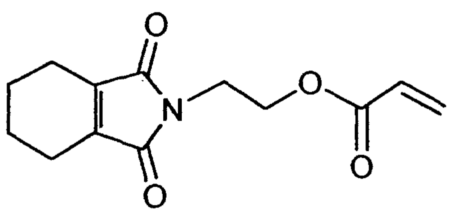

(11)

(Remark 1) "Aquaron HS10": radically polymerizable surfactant represented by the following formula (12), manufactured by Dai-ichi Kogyo Seiyaku Co., Ltd:

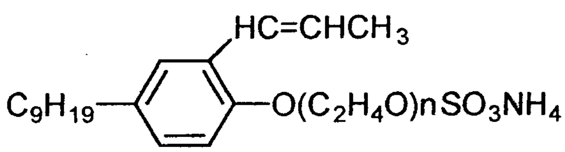

(n=10) (12)

Production Example 2

A copolymer water dispersion (A-2) was obtained by the same method as in Production Example 1, except that the monomer emulsion composition used was changed as shown in the following Table 1.

Production Example 3

A copolymer water dispersion (A-3) was obtained by the same method as in Production Example 1, except that each one part of "Newcol 707SF" (remark 2) was substituted for each 0.5 part of "Aquaron HS10" (remark 1).
(Remark 2) "Newcol 707SF": anionic surfactant having a polyoxyethylene chain, non-volatile matter: 30%, manufactured by Nippon Nyukazai Co., Ltd.

Table 1

| | Production Example | | |
|---|---|---|---|
| Monomer emulsion composition | 1 | 2 | 3 |
| Copolymer water dispersion name | A-1 | A-2 | A-3 |
| Deionized water | 100 | 100 | 100 |
| Imide acrylate | 10 | 5 | 10 |

Table 1 (continued)

| | Production Example | | |
|---|---|---|---|
| Monomer emulsion composition | 1 | 2 | 3 |
| n-Butyl methacrylate | 50 | 50 | 50 |
| Methyl methacrylate | 25 | 30 | 25 |
| n-Butyl acrylate | 14 | 14 | 14 |
| Methacrylic acid | 1 | 1 | 1 |
| Aquaron HS10 (remark 1) | 0.5 | 0.5 | |
| Newcol 707SF (remark 2) | | | 1 |

Production of carbonyl group-containing copolymer

Production Example 4

A flask charged with 36 parts of deionized water and 0.36 part of "Newcol 707SF" (remark 2) was substituted with nitrogen and heated to 80°C. Added thereto was 0.1 part of ammonium persulfate while maintaining the internal liquid at 80°C, and then a monomer emulsion having the following composition was dropwise added in 3 hours.

| Monomer emulsion composition: | |
|---|---|
| Deionized water | 52.4 parts |
| Diacetoneacrylamide | 10 parts |
| Acrylic acid | 0.5 part |
| Styrene | 17.5 parts |
| Methyl methacrylate | 18 parts |
| 2-Ethylhexyl acrylate | 18 parts |
| n-Butyl acrylate | 36 parts |
| Newcol 707SF | 9.6 parts |
| Ammonium persulfate | 0.2 part |

A solution prepared by dissolving 0.1 part of ammonium persulfate in one part of deionized water was dropwise added in 30 minutes from 30 minutes later after finishing dropwise adding and maintained further at 80°C for 2 hours to obtain a copolymer water dispersion (B-1) of an emulsion type.

Production Example 5

A copolymer water dispersion (B-2) of an emulsion type was obtained by the same method as in Production Example 4, except that the monomer emulsion dropwise added was changed to one having the following composition.

| Monomer emulsion composition: | |
|---|---|
| Deionized water | 52.4 parts |
| Diacetoneacrylamide | 5 parts |
| Acrylic acid | 0.5 part |
| Styrene | 15 parts |
| Methyl methacrylate | 37 parts |
| 2-Ethylhexyl acrylate | 16 parts |
| n-Butyl acrylate | 26.5 parts |
| Newcol 707SF | 9.6 parts |
| Ammonium persulfate | 0.2 part |

Production of modified organosilicate

Production Example 6

A reactor equipped with a stirrer, a thermometer, a refluxing tube, a nitrogen-introducing tube and a water separator was charged with 500 parts of "Ethyl Silicate 48" (remark 3), 324.5 parts of "Newcol 568" (remark 4) and 0.082 part of "Scat 24" (remark 5) and heated to 120°C while stirring in nitrogen atmosphere. Then, it was heated up to 160°C in 4 hours and maintained at the same temperature for one hour. In this case, 25 parts of evaporated ethanol and the like were distilled off by means of the water separator to obtain 800 parts of modified organosilicate.
(Remark 3) "Ethyl Silicate 48": condensation product of ethyl silicate, manufactured by Tama Chemicals Co., Ltd.
(Remark 4) "Newcol 568": polyoxyethylene nonylphenol ether, manufactured by Nippon Nyukazai Co., Ltd.
(Remark 5) "Scat 24": tin base catalyst, manufactured by Sankyo Organic Chemicals Co., Ltd.

Production of premix coating materials

Production Examples 7 to 12

A vessel was charged in order with the respective components shown in Composition A in the following Table 2, and the mixture was continued to be stirred for 30 minutes by means of a disperser until it was homogenized to obtain a pigment paste. Then, the respective components shown in Composition B in Table 2 were added in order to the above pigment paste, and the mixture was stirred by means of the disperser until it was homogenized to obtain premix coating materials (P-1) to (P-5) and (Q-1) to (Q-2).

Table 2

| | | Production Example | | | | | | |
|---|---|---|---|---|---|---|---|---|
| | | 7 | 8 | 9 | 10 | 11 | 12 | 13 |
| Premix coating material name | | P-1 | P-2 | P-3 | P-4 | P-5 | Q-1 | Q-2 |
| Composition A | Clean water | 8 | 8 | 8 | 8 | 8 | 8 | 8 |
| | Ethylene glycol | 2 | 2 | 2 | 2 | 2 | 2 | 2 |
| | Slaoff 72N (remark 6) | 0.1 | 0.1 | 0.1 | 0.1 | 0.1 | 0.1 | 0.1 |
| | Nopcosand K (remark 7) | 0.3 | 0.3 | 0.3 | 0.3 | 0.3 | 0.5 | 0.5 |
| | Titan White JR-600A (remark 8) | 25 | 25 | 25 | 25 | 25 | 25 | 25 |
| | SN Defoamer 380 (remark 9) | 0.4 | 0.4 | 0.4 | 0.4 | 0.4 | 0.4 | 0.4 |

Table 2 (continued)

| | | Production Example | | | | | | |
|---|---|---|---|---|---|---|---|---|
| | | 7 | 8 | 9 | 10 | 11 | 12 | 13 |
| Composition B | 40% Copolymer water dispersion (A-1) | 7 | | 21 | | | 21 | |
| | 40% Copolymer water dispersion (A-2) | | 49 | | 35 | | | |
| | 40% Copolymer water dispersion (A-3) | | | | | 21 | | |
| | 50% Copolymer water dispersion (B-1) | 49.4 | 16.5 | | | | | 27.5 |
| | 51% Copolymer water dispersion (B-2) | | | 39.2 | 27.5 | 39.2 | | |
| | 50% Boncoat EC-846 (remark 10) | | | | | | 39.2 | 28 |
| | Texanol | 4 | 4 | 4 | 4 | 4 | 4 | 4 |
| | Adekanol UH-438 (remark 11) | 0.7 | 1 | 0.8 | 0.9 | 0.8 | 0.8 | 0.6 |
| | SN Defoamer 380 (remark 9) | 0.4 | 0.4 | 0.4 | 0.4 | 0.4 | 0.4 | 0.4 |
| | Modified organosilicate | | | | | 1.5 | | |
| Solid matter ratio of $\frac{\text{Copolymer water dispersion (A)}}{\text{Copolymer water dispersion (B)}}$ | | $\frac{10}{90}$ | $\frac{70}{30}$ | $\frac{30}{70}$ | $\frac{50}{50}$ | $\frac{30}{70}$ | — | — |
| PVC (%) (remark 12) | | 19.7 | 19.7 | 19.5 | 19.7 | 19.7 | 19.7 | 19.7 |

(Remark 6) "Slaoff 72N": preservative, manufactured by Takeda Chemical Industrties, Ltd.
(Remark 7) "Nopcosand K": pigment dispersant, manufactured by San Nopco Ltd.
(Remark 8) "Titan White JR600A": titan white, manufactured by Tayca Corporation
(Remark 9) "SN Defoamer 380": defoamer, manufactured by San Nopco Ltd.
(Remark 10) "50% Boncoat EC-846": acryl-styrene emulsion, manufactured by Dainippon Ink & Chemicals, Inc.
(Remark 11) "Adekanol UH-438": thickener, manufactured by Asahi Denka Kogyo K. K.
(Remark 12) PVC: pigment volume concentration; volume proportion of pigment component contained in mixed solid matter of resin and pigment

Preparation of coating materials

Examples 1 to 8 and Comparative Examples 1 to 5

A cross-linking agent was blended with 100 parts of the respective premix coating materials obtained in Table 2 in combinations shown in the following Table 3 to obtain the respective coating materials.

Preparation of test coating boards

"Multiconcrete Primer EPO" (epoxy base primer, manufactured by Kansai Paint Co., Ltd.) was coated on a slate board of 70 mm × 150 mm × 5 mm. On the following day, the respective coating materials shown in the following Table 3 were diluted to about 70 KU by clean water and then coated thereon by means of a brush so that the coating amount was about 0.15 kg/$m^2$.
The respective coating materials and the respective test coating boards were evaluated according to the following criteria, and the results thereof are shown in Table 3.

Table 3

| | | Example | | | | | | | | Comparative Example | | | | |
|---|---|---|---|---|---|---|---|---|---|---|---|---|---|---|
| | | 1 | 2 | 3 | 4 | 5 | 6 | 7 | 8 | 1 | 2 | 3 | 4 | 5 |
| Composition | Premix coating material (100 parts) | P-1 | P-1 | P-1 | P-2 | P-3 | P-3 | P-4 | P-5 | P-1 | P-2 | Q-1 | Q-2 | Q-2 |
| | Adipic acid dihydrazide | 0.3 | | | 0.2 | 0.07 | 0.2 | 0.2 | 0.07 | | | | 0.3 | 0 |
| | SX-601 (remark 13) | | 2 | | | | | | | | | | | |
| | 20% Bisacetyl dihydrazone (remark 14) | | | 1 | | | | | | | | | | |
| Number of functional group per mole of carbonyl group | | 0.23 | 0.29 | 0.23 | 0.46 | 0.32 | 0.92 | 0.55 | 0.32 | 0.00 | 0.00 | - | 0.42 | 0.00 |
| Coating material storage stability | | ◎ | ◎ | ◎ | ◎ | ◎ | ◎ | ◎ | ◎ | ◎ | ◎ | ◎ | ◎ | ◎ |
| Water resistance in initial drying (outdoor) | | ◎ | ◎ | ◎ | ◎ | ◎ | ◎ | ◎ | ◎ | △ | ○ | × | △ | × |
| Water resistance in initial drying (indoor) | | ◎ | ◎ | ◎ | ○ | ◎ | ◎ | ○ | ○ | × | × | × | △ | × |
| Outdoor dirt pick-up resistance | | 4.5 | 4.8 | 4.3 | 3.8 | 4.1 | 3.2 | 3.5 | 3.1 | 5.8 | 6.1 | 7.6 | 6.2 | 7.8 |

(Remark 13) "SX-601": semicarbazide base functional group-containing compound, solid content: 45%, -NH-

$CO\text{-}NHNH_2$ content: 4.8 mmol/g resin, manufactured by Asahi Chemical Industries Ltd.
(Remark 14) 20% bisacetyl dihydrazone: methyl ethyl ketone solution

Evaluation test

Storage stability test of coating material

The respective coating materials obtained above were stored in a thermostatic chamber of 50°C for one month, and then a state of the coating materials was visually observed:

◎ : Good with little change as compared with initial stage
○: A little increased in viscosity but no problems in terms of practical use
Δ: Notably increased in viscosity and not practical but not gelatinized
×: Gelatinized

Water resistance test in initial drying (outdoor)

The respective test coating boards coated with the respective coating materials obtained above were put in a cool chamber of 5°C for 30 minutes immediately after coating and then left standing outdoors (in the shade in the northern side of a building) for about one hour in cloudy weather (conditions of a temperature of 8° to 10°C and an RH of 65% to 75%). Then, the respective test coating boards were dipped in water for 10 minutes to visually observe the appearance of the coating films:

◎ : Good with having nothing abnormal on coating film
○: A little delustering and blistering observed but no problems in terms of practical use
Δ: Blister was large or found in large amount or a part of coating film was dissolved
×: Coating film was markedly dissolved

Water resistance test in initial drying (indoor)

The respective test coating boards coated with the respective coating materials obtained above were put in a cool chamber of 10°C for 30 minutes immediately after coating and then left standing in a bright room which was not directly exposed to the sunlight but admitted natural light, for about one hour (conditions of a temperature of 20°C and an RH of 60% to 70%). Then, the respective test coating boards were dipped in water for 10 minutes to visually observe the appearance of the coating films:

◎ : Good with having nothing abnormal on coating film
○: A little delustering and blistering observed but no problems in terms of practical use
Δ: Blister was large or found in large amount or a part of coating film was dissolved
×: Coating film was markedly dissolved

Outdoor exposure test

A primer and the respective coating materials were coated on a slate board of 90 mm × 300 mm × 5 mm by the same method as the method for preparing the test coating board described above. Then the respective coating materials were further coated thereon in the same manner on the following day and dried at a room temperature for 7 days to prepare test coating boards, and each two boards thereof were prepared. One of them was used for exposure, and the other was used for a blank. The test coating board for exposure was mounted on an exposing board which faced the south at 30 degrees in Tokyo Office of Kansai Paint Co., Ltd., and it was taken out three months later to measure a color difference ΔE thereof from the test coating board for a blank. It is shown that the smaller the value is, the better the dirt pick-up resistance is.
As described above, the resin composition of the present invention readily cures at a room temperature by reacting with a carbonyl group containing in the carbonyl group-containing copolymer and a cross-linking agent. Further, even under a coating-drying condition on which evaporation of moisture is slow (for example, in cloudy weather, at low temperature or indoor), photo-curing by the copolymer containing a maleimide group is promoted when a coating film is in a range of that light such as ultraviolet light reaches thereto. Therefore, it is possible to improve coating film physical properties such as a water resistance and a stain resistance in the initial stage after coating.

## Claims

1. A curable resin composition comprising:

   (I) a maleimide group-containing copolymer obtained by copolymerizing an ethylenically unsaturated monomer (a) having a maleimide group and other ethylenically unsaturated monomer (b);
   (II) a carbonyl group-containing copolymer obtained by copolymerizing an ethylenically unsaturated monomer (c) having a carbonyl group and the other ethylenically unsaturated monomer (d); and
   (III) a compound having two or more functional groups per molecule which are the same or different and selected from a hydrazide group, a semicarbazide group and hydrazone group.

2. The curable resin composition as set forth in claim 1, wherein the ethylenically unsaturated monomer (a) having a maleimide group is a compound having an ethylenically unsaturated group and a cyclic imide group represented by the following formula (1):

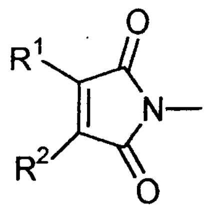

(1)

wherein $R^1$ and $R^2$ each represent independently a hydrogen atom or an alkyl group, or a group forming a carbon ring together with carbon atoms to which they are bonded.

3. The curable resin composition as set forth in claim 2, wherein the compound having a cyclic imide group is imide (meth)acrylate represented by the following formula (2):

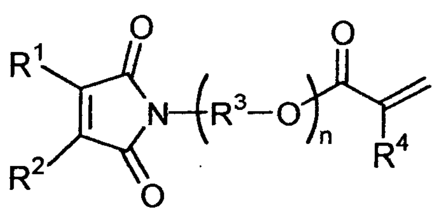

(2)

wherein $R^1$ and $R^2$ are synonymous with those set forth in claim 2; $R^3$ represents an alkylene group; $R^4$ represents a hydrogen atom or a methyl group; and n is an integer of 1 to 6.

4. The curable resin composition as set forth in claim 3, wherein imide (meth)acrylate is a compound represented by the following formulas (3) and (4):

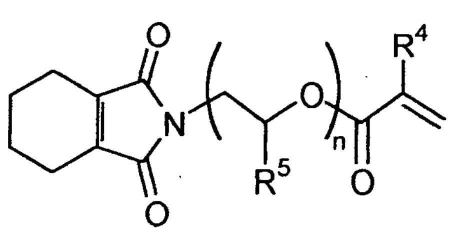

(3)

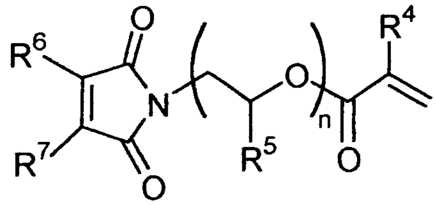

(4)

wherein $R^4$ and $R^5$ each represent independently a hydrogen atom or a methyl group; $R^6$ and $R^7$ each represent independently an alkyl group having 4 or less carbon atoms; and n is an integer of 1 to 6.

**5.** The curable resin composition as set forth in claim 1, wherein the other ethylenically unsaturated monomer (b) is selected from the group consisting of alkyl (meth)acrylates having an alkyl group having 1 to 8 carbon atoms, (meth)acrylic acid, styrene, hydroxyalkyl (meth)acrylates having an alkylene group having 2 to 4 carbon atoms and glycidyl (meth)acrylate.

**6.** The curable resin composition as set forth in claim 1, wherein the copolymer (I) is obtained by copolymerizing the ethylenically unsaturated monomer (a) having a maleimide group with the other ethylenically unsaturated monomer (b) in the presence of a surfactant as an emulsifier according to a conventional emulsion polymerization method.

**7.** The curable resin composition as set forth in claim 1, wherein the copolymer (I) is obtained by copolymerizing the ethylenically unsaturated monomer (a) having a maleimide group and the other ethylenically unsaturated monomer (b) in the following proportion each based on the total amount of the both monomers: the monomer (a) falls in a range of 1% to 40% by weight; and the monomer (b) falls in a range of 60% to 99% by weight.

**8.** The curable resin composition as set forth in claim 6, wherein the emulsifier is a radically polymerizable surfactant.

**9.** The curable resin composition as set forth in claim 8, wherein the radically polymerizable surfactant is selected from the group consisting of compounds represented by the following formulas (6), (7) and (8):

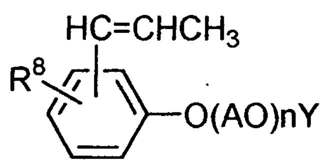

(6)

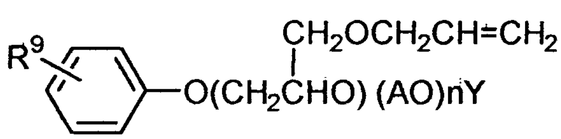

(7)

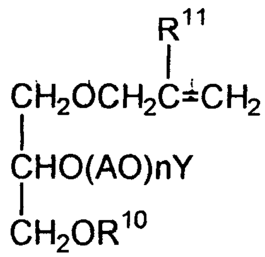

(8)

wherein $R^8$ and $R^9$ each represent independently a linear or branched alkyl group having 6 to 18 carbon atoms; $R^{10}$ represents an alkyl group having 8 to 24 carbon atoms; $R^{11}$ represents a hydrogen atom or a methyl group; and Y represents an ion-dissociative group.

**10.** The curable resin composition as set forth in claim 1, wherein the copolymer (I) has a number average molecular weight falling in a range of 1,000 to 1,000,000.

**11.** The curable resin composition as set forth in claim 1, wherein the ethylenically unsaturated monomer (c) having a carbonyl group is a monomer having the following in a molecule: at least one carbonyl-containing group selected from an aldehyde group and a keto group, and a polymerizable double bond.

**12.** The curable resin composition as set forth in claim 1, wherein the ethylenically unsaturated monomer (c) having a carbonyl group is selected from the group consisting of (meth)acrolein, formylstyrol, vinyl alkyl ketone having 4 to 7 carbon atoms, acetoacetoxyethyl (meth)acrylate and diacetone (meth)acrylamide.

**13.** The curable resin composition as set forth in claim 1, wherein the other ethylenically unsaturated monomer (d) is selected from the group consisting of styrene, alkyl (meth)acrylate having an alkyl group having 1 to 8 carbon atoms, (meth)acrylic acid and (meth)acrylamide.

**14.** The curable resin composition as set forth in claim 1, wherein the carbonyl group-containing copolymer (II) is obtained by copolymerizing the ethylenically unsaturated monomer (c) having a carbonyl group with the other ethylenically unsaturated monomer (d) in the presence of a surfactant as an emulsifier according to a conventional emulsion polymerization method.

**15.** The curable resin composition as set forth in claim 1, wherein the carbonyl group-containing copolymer (II) is obtained by copolymerizing the ethylenically unsaturated monomer (c) having a carbonyl group and the other ethylenically unsaturated monomer (d) in the following proportion each based on the total amount of the both monomers: the ethylenically unsaturated monomer (c) having a carbonyl group falls in a range of 2% to 30% by weight and the other ethylenically unsaturated monomer (d) falls in a range of 70% to 98% by weight.

**16.** The curable resin composition as set forth in claim 14, wherein the emulsifier is a surfactant comprising a polyoxyalkylene group as principal chain and having a hydrophobic group at one end and an ion-dissociative group at the other end.

**17.** The curable resin composition as set forth in claim 1, wherein the copolymer (II) has a number average molecular weight falling in a range of 5,000 to 1,000,000.

**18.** The curable resin composition as set forth in claim 1, wherein the compound (III) is selected from the group consisting of oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide, itaconic acid dihydrazide, phthalic acid dihydrazide, terephthalic acid dihydrazide, isophthalic acid dihydrazide, dihydrazide, trihydrazide or tetrahydrazide of pyromellitic acid, nitrilotriacetic acid trihydrazide, citric acid trihydrazide, 1,2,4-benzenetri-hydrazide, ethylenediaminetetraacetic acid tetrahydrazide, 1,4,5,8-naphthoic acid tetrahydrazide, polyhydrazide obtained by reacting a low polymer having a carboxylic acid lower alkyl ester group with hydrazine or a hydrazine hydrate, carbonic acid dihydrazide, bissemicarbazide, multifunctional semicarbazides obtained by reacting diisocyanates or polyisocyanate compounds derived from them with N,N-dimethylhydrazine or hydrazides

in excess amounts, water base multifunctional semicarbazides obtained by reacting dihydrazides in excess amounts with isocyanate groups contained in reaction products of the above polyisocyanate compounds with active hydrogen compounds having hydrophilic groups such as polyetherpolyols and polyethylene glycol monoalkyl ethers, mixtures of the above multifunctional semi-carbazides and water base multifunctional semicarbazides, and bisacetyl dihydrazone.

**19.** The curable resin composition as set forth in claim 1, wherein the compound (III) is dihydrazide of saturated aliphatic dicarboxylic acid having 2 to 18 carbon atoms.

**20.** The curable resin composition as set forth in claim 1, wherein the blend ratio of the maleimide group-containing copolymer (I) and the carbonyl group-containing copolymer (II) is in a range of 3/97 to 90/10 in terms of a solid matter weight ratio.

**21.** The curable resin composition as set forth in claim 1, comprising the compound (III) in such a proportion that a functional group contained in the compound (III) falls in a range of 0.01 to 2 moles per mole of a carbonyl group in the carbonyl group-containing copolymer (II).

**22.** The curable resin composition as set forth in claim 1, further comprising an organosilicate compound and/or a condensation product thereof; or a modified organosilicate compound prepared by reacting the organosilicate compound and/or condensation product thereof with a polyalkylene glycol base compound of 0.001 to 0.5 mole per mole of an alkoxy group or a hydroxyl group thereof.

**23.** The curable resin composition as set forth in claim 22, wherein the organosilicate compound is a compound represented by the following formula (9):

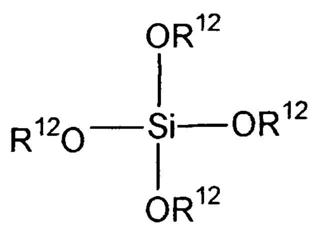

(9)

wherein $R^{12}$ is the same or different and represents a hydrogen atom or a monovalent hydrocarbon group having 1 to 10 carbon atoms.

**24.** The curable resin composition as set forth in claim 22, wherein the polyalkylene glycol base compound as a modifying agent is a compound represented by the following formula (10):

$$R^{13}O\text{-}(R^{14}O)_n\text{-}H \quad (10)$$

wherein $R^{13}$ represents a hydrogen atom, an alkyl group or an aryl group; $R^{14}$ represents an alkylene group having 2 to 4 carbon atoms; and n is 2 to 60.

**25.** The curable resin composition as set forth in claim 22, comprising the organosilicate compound and/or the condensation product thereof or the modified organosilicate compound in a range of 0.1 to 50 parts by weight per 100 parts by weight of the resin solid matter contained in the curable resin composition.

**26.** A water base coating material composition comprising the curable resin composition as set forth in claim 1.

**27.** An article coated with the water base coating material composition as set forth in claim 26.

European Patent Office

# EUROPEAN SEARCH REPORT

Application Number
EP 02 01 1632

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 765 922 A (BASF CORPORATION) 2 April 1997 (1997-04-02) * page 2, line 51 - page 4, line 55 * * page 5, line 3 - line 59 * * page 6, line 12 - page 7, line 58; claims 1-24 * | 1-27 | C08F8/30 |
| Y | GB 2 295 781 A (KANSAI PAINT CO., LTD.) 12 June 1996 (1996-06-12) * page 3, line 19 - page 8, line 16 * * page 12, line 18 - page 15, line 22 * * page 16, line 3 - page 17, line 10; claims 1-31 * | 1-27 | |
| Y | WO 99 48928 A (SUN CHEMICAL CORPORATION) 30 September 1999 (1999-09-30) * page 21, line 16 - page 40, line 17 * * page 40, line 26 - page 42, line 5 * * page 43, line 10 - page 44, line 31 * * page 45, line 20 - line 29; claims 1-29 * | 1-27 | TECHNICAL FIELDS SEARCHED (Int.Cl.7) |
| D,Y | EP 0 464 454 A (DAI-ICHI KOGYO SEIYAKU CO., LTD.) 8 January 1992 (1992-01-08) * page 4, line 1 - line 34; claims 1,2 * | 1-27 | C08F C09D |
| Y | WO 00 31197 A (AKZO NOBEL N.V.) 2 June 2000 (2000-06-02) * page 2, line 12 - page 8, line 13 * * page 9, line 1 - page 11; claims 1-30 * | 1-27 | |
| | -/-- | | |

The present search report has been drawn up for all claims

| Place of search | Date of completion of the search | Examiner |
|---|---|---|
| THE HAGUE | 13 September 2002 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 02 01 1632

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DATABASE WPI<br>Section Ch, Week 199736<br>Derwent Publications Ltd., London, GB;<br>Class A14, AN 1997-389433<br>XP002213464<br>& JP 09 169818 A (ASAHI KASEI KOGYO KK),<br>30 June 1997 (1997-06-30)<br>* abstract * | 1 | |
| A | DATABASE WPI<br>Section Ch, Week 199238<br>Derwent Publications Ltd., London, GB;<br>Class A18, AN 1992-311114<br>XP002213465<br>& JP 04 214747 A (ASAHI CHEM. IND. CO.,<br>LTD. ), 5 August 1992 (1992-08-05)<br>* abstract * | 1 | |
| A | EP 0 331 052 A (VEDRIL S.P.A.)<br>6 September 1989 (1989-09-06)<br>* claims 1-14 * | 1 | TECHNICAL FIELDS SEARCHED (Int.Cl.7) |
| A | US 4 694 048 A (E. W. CHOE)<br>15 September 1987 (1987-09-15)<br>* column 2, line 51 - column 3, line 47;<br>claims 1-15 * | 1 | |
| A | EP 0 219 046 A (BASF AG)<br>22 April 1987 (1987-04-22)<br>* column 3, line 24 - column 4, line 45 *<br>* column 5, line 12 - line 35; claims 1-5<br>* | 1 | |
| A | EP 0 618 238 A (MITSUBISHI YUKA BADISCHE<br>CO., LTD.) 5 October 1994 (1994-10-05)<br>* page 2, line 35 - page 4, line 3 *<br>* page 5, line 5 - line 47; claims 1-8 *<br>-/-- | 1 | |

The present search report has been drawn up for all claims

| Place of search | Date of completion of the search | Examiner |
|---|---|---|
| THE HAGUE | 13 September 2002 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 02 01 1632

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DATABASE WPI<br>Section Ch, Week 199242<br>Derwent Publications Ltd., London, GB;<br>Class A14, AN 1992-345113<br>XP002213466<br>& JP 04 249587 A (KANSAI PAINT CO., LTD.),<br>4 September 1992 (1992-09-04)<br>* abstract *<br>--- | 1 | |
| D,A | DATABASE WPI<br>Section Ch, Week 198945<br>Derwent Publications Ltd., London, GB;<br>Class A41, AN 1989-327660<br>XP002213467<br>& JP 01 242569 A (NIPPON KAYAKU KK),<br>27 September 1989 (1989-09-27)<br>* abstract *<br>--- | 1 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 13 September 2002 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 01 1632

This annex lists the patent family membersrelating to the patent documents cited in the above-mentioned European search report.
The members are as contained in the European Patent Office EDP file on
The European Patent Office is in no way liable for these particulars which are merely given for the purpose of information.

13-09-2002

| Patent document cited in search report | | Publication date | Patent family member(s) | | | Publication date |
|---|---|---|---|---|---|---|
| EP 765922 | A | 02-04-1997 | BR | 9603928 | A | 09-06-1998 |
| | | | CA | 2186776 | A1 | 28-03-1998 |
| | | | EP | 0765922 | A1 | 02-04-1997 |
| | | | JP | 9221631 | A | 26-08-1997 |
| GB 2295781 | A | 12-06-1996 | JP | 9038568 | A | 10-02-1997 |
| | | | JP | 8206585 | A | 13-08-1996 |
| | | | US | 5928730 | A | 27-07-1999 |
| WO 9948928 | A | 30-09-1999 | JP | 11124403 | A | 11-05-1999 |
| | | | JP | 11124404 | A | 11-05-1999 |
| | | | JP | 11292874 | A | 26-10-1999 |
| | | | JP | 11302278 | A | 02-11-1999 |
| | | | AU | 1586499 | A | 18-10-1999 |
| | | | EP | 0878482 | A1 | 18-11-1998 |
| | | | EP | 1073685 | A1 | 07-02-2001 |
| | | | US | 6410611 | B1 | 25-06-2002 |
| | | | WO | 9948928 | A1 | 30-09-1999 |
| EP 464454 | A | 08-01-1992 | JP | 2652459 | B2 | 10-09-1997 |
| | | | JP | 4053802 | A | 21-02-1992 |
| | | | DE | 69103696 | D1 | 06-10-1994 |
| | | | DE | 69103696 | T2 | 22-12-1994 |
| | | | EP | 0464454 | A2 | 08-01-1992 |
| | | | US | 5332854 | A | 26-07-1994 |
| WO 0031197 | A | 02-06-2000 | US | 6251973 | B1 | 26-06-2001 |
| | | | AU | 3034700 | A | 13-06-2000 |
| | | | BR | 9915594 | A | 07-08-2001 |
| | | | CN | 1332776 | T | 23-01-2002 |
| | | | WO | 0031197 | A1 | 02-06-2000 |
| | | | EP | 1137732 | A1 | 04-10-2001 |
| | | | US | 2002115763 | A1 | 22-08-2002 |
| JP 9169818 | A | 30-06-1997 | JP | 3212857 | B2 | 25-09-2001 |
| JP 4214747 | A | 05-08-1992 | JP | 2925747 | B2 | 28-07-1999 |
| EP 331052 | A | 06-09-1989 | IT | 1216757 | B | 08-03-1990 |
| | | | BR | 8900819 | A | 17-10-1989 |
| | | | CA | 1333121 | A1 | 15-11-1994 |
| | | | EP | 0331052 | A2 | 06-09-1989 |
| | | | JP | 1289807 | A | 21-11-1989 |
| US 4694048 | A | 15-09-1987 | CA | 1270091 | A1 | 05-06-1990 |
| | | | EP | 0242800 | A2 | 28-10-1987 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 02 01 1632

This annex lists the patent family membersrelating to the patent documents cited in the above-mentioned European search report.
The members are as contained in the European Patent Office EDP file on
The European Patent Office is in no way liable for these particulars which are merely given for the purpose of information.

13-09-2002

| Patent document cited in search report | | Publication date | Patent family member(s) | | | Publication date |
|---|---|---|---|---|---|---|
| US 4694048 | A | | JP | 62273203 | A | 27-11-1987 |
| EP 219046 | A | 22-04-1987 | DE | 3536262 | A1 | 16-04-1987 |
| | | | AT | 71389 | T | 15-01-1992 |
| | | | DE | 3683340 | D1 | 20-02-1992 |
| | | | EP | 0219046 | A2 | 22-04-1987 |
| | | | ES | 2027949 | T3 | 01-07-1992 |
| | | | US | 4769410 | A | 06-09-1988 |
| EP 618238 | A | 05-10-1994 | JP | 2920577 | B2 | 19-07-1999 |
| | | | JP | 5098071 | A | 20-04-1993 |
| | | | EP | 0618238 | A1 | 05-10-1994 |
| | | | DE | 69306750 | D1 | 30-01-1997 |
| | | | DE | 69306750 | T2 | 07-05-1997 |
| JP 4249587 | A | 04-09-1992 | JP | 3108442 | B2 | 13-11-2000 |
| JP 1242569 | A | 27-09-1989 | NONE | | | |

EPO FORM P0459

For more details about this annex : see Official Journal of the European Patent Office, No. 12/82